# FASCICULE DE BREVET EUROPEEN

(11) **EP 1 838 771 B1**
(45) Date de publication et mention de la délivrance du brevet: **12.11.2008**
(21) Numéro de dépôt: 06709027.4
(22) Date de dépôt: 03.01.2006
(51) Int. Cl.: C08K 5/101, C08K 5/1515, C08K 5/00, C09D 127/06

(54) **ACIDES GRAS ESTERIFIES POUR LA PLASTIFICATION DU PVC**
VERESTERTE FETTSÄUREN ZUM WEICHMACHEN VON PVC
ESTERIFIED FATTY ACIDS FOR THE PLASTICIZING OF PVC

(30) Priorité: 17.01.2005 FR 0500566
(43) Date de publication de la demande: 03.10.2007
(73) Titulaire: GERFLOR, 69100 Villeurbanne (FR)
(72) Inventeur: HINAULT, Robert, F-69380 Marcilly d'Azergues (FR); HOANG, Lè Chién, F-86340 Nouaillee Maupertuis (FR); BARBIER, Jacques, F-86360 Montamise (FR)
(74) Mandataire: Dupuis, François
(86) Numéro de dépôt international: PCT/FR2006/000003
(87) Numéro de publication internationale: WO 2006/075071

(56) Documents cités:
- DE-A1- 19 509 085
- FR-A- 1 145 180
- FR-A- 1 254 722
- FR-A- 1 331 153
- FR-A- 2 354 358
- US-A1- 2002 013 396

## Description

### DOMAINE TECHNIQUE

La présente invention a trait à des dérivés de ressources renouvelables, pour lesquels des propriétés de plastifiant du polychlorure de vinyl (PVC) ont été mises en évidence.

Plus précisément, il s'agit d'acides gras estérifiés, issus de tall-oil et ayant subi une réaction de Diels-Alder ou issus du tournesol oléïque et ayant subi une réaction d'époxydation.

Par conséquent, ces molécules sont utilisées pour la plastification du PVC, en particulier dans la fabrication des revêtements de sol.

### ETAT DE LA TECHNIQUE ANTERIEURE

Le polychlorure de vinyl ou PVC est un polymère de grande diffusion qui trouve de très nombreuses applications sous forme rigide (profilés, plaques, corps creux...), mais également sous forme plastifiée, en particulier dans le domaine des feuilles, films, tissus enduits, revêtements de sols et mastics.

Les plastifiants ont pour principal rôle et intérêt de diminuer la dureté (quantifiée en shore A ou D), le module d'Young du polymère et sa température de transition vitreuse (Tg). En outre, un plastifiant adapté permet d'augmenter l'allongement à la rupture et la résistance au choc à basse température.

Les couches de PVC plastifié sont réalisées principalement par les techniques d'enduction ou de calandrage pour les revêtements de sols mais d'autres technologies sont possibles comme l'extrusion ou le pressage.

Dans l'enduction, le PVC est dispersé dans le plastifiant liquide puis cette dispersion, appelée plastisol, est enduite sur un support et gélifiée dans un four (air chaud ou IR) à des températures comprises entre 160 et 190°C pendant 3 à 4 minutes. La viscosité du plastisol peut être ajustée en fonction du support à enduire. Pour l'obtention de couches expansées, on ajoute dans le plastisol un agent gonflant qui libère un gaz pendant la phase de gélification.

Dans la technique de calandrage, les différents ingrédients de la formulation sont mélangés sous forme de "dry-blend" (mélange poudreux), car le plastifiant est absorbé par les grains poreux de PVC. Ce mélange est ensuite gélifié dans un mélangeur interne ou une extrudeuse bi-vis. La matière gélifiée est, par la suite, mise en forme par calandrage sous forme de feuilles de largeur et d'épaisseurs contrôlées.

La liste des plastifiants du PVC, connus à ce jour, est importante. Les plus utilisés sont actuellement les esters issus de la chimie du pétrole, par exemple les adipates, les sébaçates, les phosphates, les citrates ou les butyrates, et plus particulièrement les phtalates, tels que le diéthylhexylphtalate (DEHP ou DOP).

D'un point de vue environnemental, il est évidemment souhaitable de trouver des alternatives à ces solutions considérées comme polluantes. Par ailleurs, la toxicité des phtalates sur la santé humaine a été démontrée et leur utilisation risque d'être de plus en plus limitée.

Ainsi, il a été envisagé d'utiliser des huiles végétales "modifiées", en particulier époxydées, comme plastifiant du PVC. Par exemple, l'huile de soja époxydée est commercialisée. Cependant, en pratique, la plupart de ces huiles ne peut être utilisée qu'en combinaison avec un plastifiant classique, dans la mesure où elles ne peuvent être intégrées au polymère qu'à des taux faibles (<10 pour cent de résine). On les considère donc comme des plastifiants secondaires. Elles sont en fait surtout utilisées pour leur action stabilisante vis à vis du PVC, grâce à leurs fonctions époxy.

A titre d'exemple, le document FR-A-2 623 514 décrit des compositions stabilisées, utilisables dans la fabrication de feuilles à base de PVC, incorporant certes de 3 à 10 parties d'esters d'acide gras insaturés époxydés, mais également 10 à 70 parties d'au moins un plastifiant organique tel que le DOP.

Il a toutefois été montré que certaines plantes étaient des sources mieux adaptées pour l'obtention d'acides gras destinés à la plastification du PVC et que certaines réactions chimiques réalisés sur ces acides gras, notamment l'époxydation, permettaient d'améliorer leurs propriétés.

Ainsi, le document US 2002/013396 décrit des compositions pour plastifier le PVC comprenant des acides gras significativement insaturés (indice d'iode > 100), issus d'huiles végétales, estérifiés à l'aide d'alcool et largement époxydés. Le tournesol et le tall-oil sont plus particulièrement cités comme sources adaptées.

Il existe toutefois un besoin évident d'identifier de nouvelles substances utilisables pour la plastification du PVC, présentant des qualités supérieures aux solutions décrites dans l'art antérieur, notamment une meilleure compatibilité avec le PVC pour éviter les problèmes d'exudation dans le temps rendant l'utilisation des objets fabriqués (par exemple les revêtements de sols) difficile.

### EXPOSE DE L'INVENTION

Dans le cadre de l'invention, le Demandeur a montré qu'il était possible d'obtenir des dérivés issus de ressources naturelles renouvelables bien spécifiques, particulièrement adaptés à la fonction de plastifiant du PVC.

Plus précisément, il s'agit d'acides gras contenus dans des ressources renouvelables et modifiés par estérification.

Ainsi, l'invention concerne l'utilisation des acides gras estérifiés, identifiés comme particulièrement intéressants dans le cadre de la présente invention, comme plastifiants du PVC.

Un plastifiant est considéré comme particulièrement intéressant, lorsqu'il confère des propriétés physiques et mécaniques (temps de gélification, température de fusion, dureté, résistance à la rupture...) au moins comparables à celles d'un plastifiant de référence, en l'occurrence le DEHP, ainsi que des qualités esthétiques acceptables (aspect et toucher).

Par définition, les acides gras se composent d'une chaîne hydrocarbonée linéaire à nombre pair de carbone, terminée par un groupement carboxyle, saturée ou non en hydrogène.

Dans le cadre de l'invention, ces acides gras sont issus de source naturelle, renouvelable. De fait, ils se présentent, de préférence, sous forme d'un mélange d'acides gras estérifiés.

S'il n'est pas possible de déterminer la composition exacte de tels mélanges, l'analyse de certains paramètres, définis et mesurés selon des normes bien établies, permet de définir plus avant les mélanges obtenus :
- l'indice d'acide : (NFT 60-204)
- l'indice de saponification : (NF ISO 3657)
- l'indice d'hydroxyle : (AOCS-TX1a-66)
- l'indice d'iode : (NF ISO 3961)
- l'indice de peroxyde : (NFT 60-220)
- l'indice d'oxyrane : (AOCS-Cd9-57)
- la viscosité cinématique : (ISO 3104)

Dans le cadre de l'invention, le Demandeur a identifié deux sources renouvelables privilégiées :
- le tall-oil, une résine liquide obtenue comme sous-produit dans la fabrication des pâtes chimiques à partir du bois de pin ; et
- l'huile de tournesol oléique produite par une variété de tournesol riche en acide oléique.

Les acides gras couramment retrouvés dans ces sources sont :
- l'acide palmitique (C₁₆H₃₂O₂) ;
- l'acide palmitoléique (C₁₆H₃₀O₂) ;
- l'acide stéarique (C₁₈H₃₆O₂) ;
- l'acide oléique (C₁₈H₃₄O₂) ;
- l'acide linoléique (C₁₈H₃₂O₂) ;
- l'acide linolénique (C₁₈H₃₀O₂) ;
- l'acide arachidique (C₂₀H₄₀O₂) ;
- l'acide eicosénique (C₂₀H₃₈O₂) ;
- l'acide bébénique (C₂₂H₄₄O₂) ;
- l'acide érucique (C₂₂H₄₂O₂).

Selon l'invention, les acides gras utilisés comme plastifiants du PVC possèdent donc des longueurs de chaînes comprises entre 16 et 22 atomes de carbone.

Afin d'augmenter la polarité et l'encombrement des acides gras naturels en vue de leur bonne interaction avec le PVC, le Demandeur a soumis ces acides gras à une estérification, consistant à faire réagir la fonction carboxylique avec un alcool.

A priori, tout alcool contenant au moins deux atomes de C peut être utilisé. Cependant, dans le cadre de l'invention, l'éthanol est préférentiellement utilisé dans la mesure où cet alcool, disponible en larges quantités, est également d'origine naturelle. On obtient ainsi des esters éthyliques.

Selon un premier aspect de l'invention, les acides gras utilisés sont issus du tall-oil et ont subi une réaction de Diels-Alder.

La réaction de Diels Alder consiste à faire réagir un alcène et un diène conjugué pour former un dérivé de cyclohéxène. Cette réaction peut par exemple avoir lieu avec un acide gras monoinsaturé de type C18:1 et un acide gras diinsaturé de type C18:2, présents dans le tall-oil.

Après estérification selon l'invention, les produits de cette réaction ont donc la formule suivante : 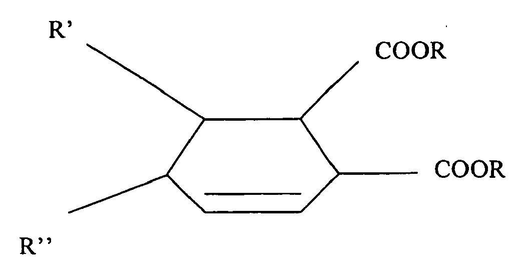 avec R = radical alcoolique ;
R' et R"= radical C₁₄ à C₂₂.

Préférentiellement, le mélange d'acide gras estérifiés est obtenu après estérification d'un produit issu du tall-oil et ayant subi une réaction de Diels-Alder, commercialisé sous le nom de AG21 (Acides Gras 21, société DRT). Le mélange est donc composé d'esters éthyliques de diacide cyclique de tall-oil (EEAG21).

Un exemple de mélange, particulièrement performant selon l'invention, est caractérisé comme suit :
- densité à 20°C (g/l) : environ 950
- viscosité cinématique à 40°C (mm²/s) : entre 5 et 20
- indice d'acide (mg de KOH/g) : ≤11
- indice de saponification (mg de KOH/g) : entre 250 et 265
- indice d'iode (g d'I2 /100g): ≤ 70

Une deuxième composition selon l'invention donnant des résultats tout aussi remarquables comprend des acides gras estérifiés isolés à partir d'huile de tournesol oléïque et ayant subi une époxydation.

En pratique, l'époxydation est réalisée après l'estérification.

Plus particulièrement, les esters éthyliques époxydés du tournesol oléique (EETOE) donnent des résultats tout à fait avantageux lorsqu'ils sont utilisés pour plastifier le PVC.

Un mélange, très avantageux selon l'invention, est caractérisé comme suit :
- indice d'acide (mg de KOH/g) : ≤ 2
- indice de saponification (mg de KOH /g) : entre 175 et 185
- indice d'iode (g d'I₂/100g) : ≤ 10, préférentiellement entre 1 et 3
- indice de peroxyde (meq d'O₂/kg) : ≤ 50
- indice d'oxyrane (%) : ≥ 4,5
- indice d'hydroxyle (mg de KOH/g) ≤ 20
- viscosité cinématique (mm²/s à 40°C) : entre 5 et 20.

L'invention concerne également toute composition intégrant une résine de PVC et un plastifiant tel que défini dans la présente invention.

Une telle composition peut se présenter sous forme liquide (plastisol) ou sous forme de "dry-blend", lorsque le calandrage ou l'extrusion sont envisagés.

Une telle composition comprend en outre avantageusement un stabilisant thermique, dont la nature et les modalités d'utilisation sont bien connues de l'homme du métier.

Ces plastifiants du PVC présentent de nouvelles propriétés dans le cadre de cette utilisation. L'invention porte donc également sur du PVC plastifié à l'aide de ces nouveaux plastifiants, ainsi que sur des revêtements, en particulier de sol, comprenant au moins une couche de PVC plastifié au moyen de ces plastifiants. Les accessoires de type profilés, plinthes, cordons de soudure, ou barres de seuil, nécessaires à la pose des revêtements de sol, sont également concernés par l'invention. Ces derniers sont couramment obtenus par extrusion sous forme de profilés.

### EXEMPLE DE REALISATION

L'invention et les avantages qui en découlent ressortiront mieux des exemples de réalisation qui suivent. Ces exemples ne sont cependant en aucun cas limitatifs.

### 1) Protocole de préparation de l'EETOE

Les esters éthyliques époxydés ont été synthétisés en deux étapes :
- éthanolyse d'huile de tournesol oléique ;
- époxydation des esters éthyliques par de l'eau oxygénée, en présence d'un acide carboxylique à chaîne courte (acide formique, acide acétique).

Le mélange obtenu à l'issu de ces deux réactions est défini à l'aide des paramètres suivants :
- indice d'acide (mg de KOH/g) ≤ 2
- indice de saponification (mg de KOH /g) 175-180
- indice d'iode, g d'I2/100g 1-2
- indice de peroxyde meq d'O2/kg ≤ 20
- indice d'oxyrane, % > 4,5
- indice d'hydroxyle, mg de KOH/g ≤ 20
- matières volatiles < 0,25%
- viscosité cinématique à 40°C, mm²/s 9,6

### 2) Protocole de préparation de l'EEAG21

L'AG 21 est un mélange d'acide gras issus du tall-oil dont les caractéristiques sont les suivantes :
- indice d'acide mg de KOH/g : 262
- acides gras de 18 atomes de C : 20 à 60 %
- diacides de 21 atomes de C : 36 à 70 %.

Les esters éthyliques d'AG21 ont été obtenus par estérification avec de l'éthanol, en présence d'un catalyseur acide et à la température d'ébullition de l'éthanol (à reflux). Après estérification, les esters ont été lavés et séchés.

Le mélange ainsi obtenu est défini à l'aide des paramètres suivants :
- matières volatiles < 0,3 %
- densité à 20°C, g/l 950
- viscosité cinématique à 40°C, mm²/s 18,7
- indice d'acide, mg de KOH /g 0,8
- indice de saponification, mg de KOH/g 264,4
- indice d'Iode, g d'I₂ /100g 65,8

### 3) Propriétés des plastifiants EETOE et EEAG21 :

Le pouvoir gélifiant, les propriétés mécaniques ainsi que la compatibilité avec le PVC de EETOE et EEAG21 ont été comparées à celles de 4 plastifiants connus (di isononyl phtalate ou DINP ; sébaçate de 2 éthyl hexanol ; maléate d'éthyl hexanol ; di isononyl cyclohexane ou DINCH), ainsi que celles de l'huile de tournesol oléique simplement époxydée.

La formule testée comprend 100 parts d'une résine PVC de KWert 70, 35 parts du plastifiant à évaluer, 1 part d'un stabilisant thermique à base d'étain. Les expériences ont été conduites sur un appareil Plasti-corder PL21 00 de Brabender.

Les résultats sont présentés dans le tableau 1 ci-dessous :

| | | **Temps** | | | | | | | | | | |
|---|---|---|---|---|---|---|---|---|---|---|---|---|
| | **indice** | **de** | **Couple** | **Energie** | | **Mod** | **Mod** | | | **ALL** | **ASPECT** | |
| **Plastifiant** | **d'iode** | **fusion** | **max** | **/Max** | **Tf** | **5%** | **10%** | **Dureté** | **CR** | **Rupt** | **FILM** | **Toucher** |
| | g | | | | | | | Shore | | | | |
| | d'I2/100g | min | Nm | kNm | °C | Mpa | Mpa | D | N/mm² | % | | |
| | | | | | | | | | | | | |
| DINP | | 02:30 | 56.3 | 18.2 | 133 | 263 | 194 | **39** | 19.5 | 177 | T | G |
| | | | | | | | | | | | | |
| Huile de tournesol oléique époxydée | 1 | 03:30 | 45 | 24.2 | 124 | 333 | 227 | **40** | 15.6 | 102 | NT | E |
| | | | | | | | | | | | | |
| Esters éthyliques de tournesol oléique époxydés | 1.4 | 01:10 | 51.1 | 15.1 | 126 | 102 | 94 | **26** | 16.4 | 212 | T | NG |
| | | | | | | | | | | | | |
| Sébaçate de 2-éthyl hexanol | | 3.38 | 40.5 | 31.9 | 120 | 212 | 158 | **31** | 14.6 | 149 | T | G |
| Maléate de 2-éthyl hexanol | | 1.42 | 47.5 | 16.6 | 127 | 166 | 135 | **32** | 18.6 | 210 | T | G |
| DINCH | | 3.36 | 43.1 | 23.6 | 124 | 281 | 203 | **39** | 16.6 | 133 | T | G |
| Esters éthyliques de diacide cyclique de TallOil | | 2.22 | 44.4 | 25.6 | 130 | | | | | | T | NG |
| Surface Naturelle TLCF | | | | | | 325 | 250 | **40** | 27 | 217 | | |
| Dalle BG 65 | | | | | | 400 | 290 | **33** | 27 | 203 | | |

| | | | | | | | | | | | | |
|---|---|---|---|---|---|---|---|---|---|---|---|---|
| T signifie transparent, NT non transparent, E exudation, G gras et NG non gras. | | | | | | | | | | | | |

Le temps de fusion, le couple max, l'énergie de fusion et la T° de fusion sont obtenus avec un viscosimètre Brabender (norme interne).
Les propriétés mécaniques (module à 5 et 10% d'allongement, charge rupture et allongement rupture) sont évalués selon la norme ISO 527.
La dureté shore est évaluée selon la norme ISO 868.

### 4) Utilisation des plastifiants EETOE et EEAG21 en enduction :

### 4-1. Enduction compacte avec une formulation basse viscosité (tableau 2 ci-dessous) :

| Composition | 1 | 2 | 3 |
|---|---|---|---|
| Solvin 372 NF (résine de PVC) | 100 | 100 | 100 |
| **DEHP** | **40** | - | - |
| **EETOE** | - | 40 | - |
| **EEAG21** | - | - | **40** |
| Mark TK262GV (stabilisateur thermique) | 1 | 1 | 1 |

| Viscosité | Gradient | 1h | 7j | 1h | 7j | 1h | 7j |
|---|---|---|---|---|---|---|---|
| ROTO | vitesse | | | | | | |
| RV20 : Pa.s | s-1 | **DEHP** | | **EETOE** | | **EEAG21** | |
| | 1 | 18.7 | 32.9 | 4.3 | 13.8 | 5.8 | 15.9 |
| | 1.4 | 17.6 | 28.5 | 3.9 | 11.8 | 5.3 | 14.5 |
| | 2 | 15.8 | 26.8 | 3.5 | 9.7 | 5.2 | 12.8 |
| | 4 | 14.9 | 23.7 | 3 | 7.6 | 4.8 | 11 |
| | 8 | 14.3 | 22.7 | 2.6 | 6.3 | 4.7 | 9.6 |
| | 12 | 14.5 | 22.8 | 2.5 | 5.7 | 4.8 | 9 |
| | 16 | 14.8 | 22.8 | 2.4 | 5.3 | 5 | 8.9 |
| | 24 | 16 | 24.4 | 2.3 | 4.9 | 5.2 | 8.8 |
| | 32 | 16.9 | 25.4 | 2.2 | 4.6 | 5.5 | 8.9 |
| | 36 | 17.2 | 26.2 | 2.2 | 4.5 | 5.6 | 8.7 |
| | 64 | | | 2.2 | 4.2 | 6.8 | 10.2 |
| | 100 | | | 2.2 | 4.2 | 8 | 11 |
| | 200 | | | 2.4. | 4.5 | | |
| | 400 | | | 2.6 | | | |

| Gélification 1.30 mn à 200°C | | | | | | | |
|---|---|---|---|---|---|---|---|
| Indice de jaune(delta) | | 4.7 | | 6.9 | | 5.8 | |
| Brillance % | | 66.9 | | 72.4 | | 73.6 | |
| Transparence % | | 85.3 | | 90.2 | | 91.4 | |
| All Rupture % | | 190 | | 347 | | 320 | |
| CR MPa | | 18 | | 24 | | 24 | |

Le tableau 3 (ci-dessus) révèle qu'on obtient :
- une viscosité moindre à 1 heure, comme à 7 jours ;
- une brillance et une transparence légèrement meilleures ;
- un indice de jaune un peu supérieur ;
- des qualités de résistance améliorées.

### 4-2.Couche compacte (tableau 4 ci-dessous), avec enduction d'un film de 0,5 mm d'épaisseur (à 200°C):

| composition | 1 | 2 | 3 |
|---|---|---|---|
| Solvin 373 MH (résine de PVC) | 100 | 100 | 100 |
| **DEHP** | **66** | - | - |
| **EETOE** | - | **66** | - |
| **EEAG21** | - | - | **66** |
| Irgastab BZ 505 (stabilisateur thermique) | 2 | 2 | 2 |

| BRILLANCE | Temps en sec | **DEHP** | **EETOE** | **EEAG21** |
|---|---|---|---|---|
| | 45 | 20.5 | 19.6 | 20.3 |
| | 90 | 71.5 | 85.6 | 78.9 |
| | 120 | 91.7 | 84.8 | 89.9 |
| TRANSPARENCE | 45 | 87.5 | 86.5 | 84.1 |
| | 90 | 91 | 90.8 | 90.2 |
| | 120 | 92.7 | 90.4 | 90.2 |
| INDICE DE JAUNE | 45 | 1.8 | 4 | 4.3 |
| | 90 | 3 | 7.3 | 5.5 |
| | 120 | 4.2 | 8.9 | 8 |
| | | | | |
| CONTRAINTE MPA | 45 | 15.8 | 14.2 | 16.4 |
| | 120 | 16.6 | 17.7 | 20.9 |
| | | | | |
| ALLONGEMENT RUPTURE % | 45 | 317 | 399 | 347 |
| | 120 | 300 | 426 | 407 |
| DURETE SHORE A | 270 | 67.5 | 60.5 | 70.3 |

Les propriétés des films obtenus, relatées dans le tableau 5 ci-dessous, sont comparables à celles du tableau 3.

### 4-3. Formule de mousse (tableau 6 ci-dessous) :

| Formule | 1 | 2 | 3 |
|---|---|---|---|
| S367 NK (PVC) | 100 | 100 | 100 |
| **DEHP** | **70** | - | - |
| **EETEOE** | - | **70** | - |
| **EEAG21** | - | - | **70** |
| Kronos 2220 (oxyde de titane) | 3 | 3 | 3 |
| Durcal 15 (CaCO₂) | 25 | 25 | 25 |
| MB (agent gonflant) | 6 | 6 | 6 |

| MB | | | |
|---|---|---|---|
| Genitron ACSP4 | 3 | 3 | 3 |
| Baerostab KK42 (accélérateur de décomposition) | 2 | 2 | 2 |
| DEHP (enrobage) | 1 | 1 | 1 |

| Rhéologie | Gradient de | **DEHP** | **EETOE** | **EEAG21** |
|---|---|---|---|---|
| RV 20 | vitesse | | | |
| | en sec⁻¹ | | | |
| | 1 | 13.6 | 2.6 | 10.7 |
| | 1.4 | 11.8 | 2.2 | 8.4 |
| | 2 | 10.1 | 1.9 | 6.7 |
| | 4 | 7.7 | 1.5 | 4.7 |
| | 8 | 6.4 | 1.2 | 3.6 |
| | 12 | 5.8 | 1.1 | 3.1 |
| | 16 | 5.3 | 1.1 | 2.9 |
| | 24 | 5 | 1 | 2.6 |
| | 32 | 4.7 | 0.9 | 2.4 |
| | 36 | 4.7 | 0.9 | 2.3 |
| | 64 | 4.4 | 0.8 | 2.2 |
| | 100 | 4.3 | 0.8 | 2.1 |
| | 200 | 3.9 | 0.7 | 1.9 |
| | 400 | 2.9 | 0.7 | 1.8 |
| Severs | 500 | 3.7 | | |
| | 600 | 3.5 | | |
| | 1000 | 3.2 | | |
| | 2000 | 2.8 | | 1.4 |
| | 3000 | 2.7 | 0.7 | 1.4 |
| | 4000 | 2.5 | 0.7 | 1.3 |
| Densité des plastisols (g/cm³) | | 1.29 | 1.26 | 1.28 |
| Enduction 1mm /200°C | | | | |
| 90 sec | | | | |
| Poids (g) | | 1.14 | 1.08 | 1.13 |
| Epaisseur finale (mm) | | 3.73 | 3.32 | 4.13 |
| Densité (g/cm3) | | 0.31 | 0.33 | 0.27 |
| Indice de jaune (D65) | | 15.9 | 28.1 | 22.1 |
| Qualité cellulaire | | 1 | 1 | 3 |
| Aspect de surface | | 1 | 1 | 2 |
| 120 sec (200°C) | | | | |
| Poids (g) | | 1.12 | 1.06 | 1.11 |
| Epaisseur (mm) | | 4.5 | 4.33 | 4.63 |
| Densité (g/cm3) | | 0.25 | 0.24 | 0.24 |
| Indice de jaune (D65) | | 11.5 | 23.8 | 21.1 |
| Qualité cellulaire | | 1 | 2 | 3 |
| Aspect de surface | | 1 | 1 | 3 |

Le tableau 7 (ci-dessus) révèle des qualités équivalentes obtenues à partir de formules de mousse.

L'ensemble de ces résultats démontre qu'il est possible de produire, avec EETOE ou EEAG21 comme plastifiant, des couches enduites compactes ou cellulaires, avec un avantage au niveau rhéologique et un inconvénient (mineur) au niveau indice de jaune, comparativement au DEHP.

### 5) Utilisation de suspension de PVC en calandrage :

Deux résines ont été testées : Solvin 264GB (KW 64) et Solvin 271PC (KW 71)

L'absorption des plastifiants mesurée à T=75°C est présentée dans le tableau 8 (ci-dessous) :

| Résultats en % | 264 GB | | 271 PC | |
|---|---|---|---|---|
| | TEMPS | % | TEMPS | % |
| **DEHP** | 0 | 23.8 | 0 | 33.3 |
| | 5 | 28 | 5 | 36.7 |
| | 10 | 51.7 | 10 | 53.1 |
| | 15 | 75.1 | 15 | 75.1 |
| | 30 | 128.1 | 30 | 106.9 |
| | 60 | 137.1 | 60 | 113.1 |
| **EETOE** | 0 | 21.2 | 0 | 29.8 |
| | 5 | 101.3 | 5 | 91.7 |
| | 10 | 105 | 10 | 92.7 |
| | 15 | 106.3 | 15 | 93.7 |
| | 30 | 107.7 | 30 | 94.9 |
| | 60 | 108.4 | 60 | 95.3 |
| **EEAG21** | 0 | 22.33 | 0 | 31.2 |
| | 5 | 24.4 | 5 | 32.9 |
| | 10 | 33.6 | 10 | 40.4 |
| | 15 | 52.3 | 15 | 53.9 |
| | 30 | 78 | 30 | 77.1 |
| | 60 | 81 | 60 | 79.4 |

Les mesures montrent que l'absorption des plastifiants EETEO et EEAG21, pour deux résines de poids moléculaire différent, se compare à celle du DEHP de la façon suivante :
- pour le EETOE, la vitesse d'absorption est plus élevée que celle du DEHP ;
- pour le EEAG21, le résultat est inverse.

Dans tous les cas, ces vitesses d'absorption sont compatibles avec les procédés de fabrication des "dry blend".

Par ailleurs, la stabilité thermique a été évaluée sur un mélangeur Collin à 160°C. Les résultats sont notés dans le tableau 9 suivant :

| Echantillons | 1 | 2 | 3 | 4 | 5 | 6 | 7 |
|---|---|---|---|---|---|---|---|
| Solvin 271PC (PVC) | 100 | 100 | 100 | 100 | 100 | 100 | 100 |
| **EETOE** | - | **25** | **40** | **55** | - | - | - |
| **EEAG21** | - | - | - | - | **25** | **40** | **55** |
| **DEHP** | **45** | - | - | - | - | - | - |
| Mélange maitre | 5 | 5 | 5 | 5 | 5 | 5 | 5 |
| Mesure YI | 4.8 | 9.8 | 6.6 | 5.7 | 9.8 | 8.4 | 8.2 |
| Stabilité thermique min/sec | 17'15" | >30' | >30' | >30' | 16'45 | 16'45 | 17'45 |
| Dureté shore A | 87 | >90 | 83 | 74 | >90 | >90 | 81 |
| Dureté Shore D | 33 | 48 | 28 | <20 | 57 | 37 | 25 |

A nouveau, on constate une stabilité thermique au moins égale, avec une dureté potentiellement amoindrie.

## Revendications

1. Utilisation d'acide gras estérifiés comme plastifiant du PVC, ***caractérisée* en ce que :**
- les acides gras, isolés à partir de tall-oil, ont subi une réaction de Diels-Alder et ont une formule générale : 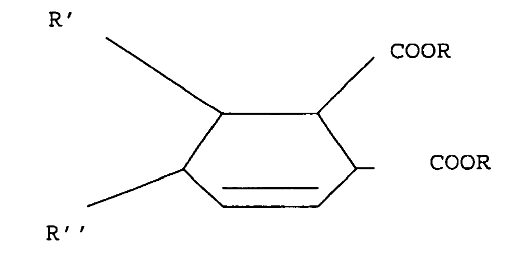 avec R = radical alcoolique ;
R' et R"= radical C₁₄ à C₂₂,
ou
- les acides gras sont isolés à partir d'huile de tournesol oléique et sont époxydés.

2. Utilisation selon la revendication 1, ***caractérisée* en ce qu'**il s'agit d'un mélange d'acides gras estérifiés.

3. Utilisation selon la revendication 1 ou 2, ***caractérisée* en ce que** les acides gras possèdent une chaîne carbonée comprenant de 16 à 22 atomes de carbone.

4. Utilisation selon l'une des revendications précédentes, ***caractérisée* en ce que** les acides gras estérifiés sont des esters éthyliques.

5. Utilisation selon la revendication 4, ***caractérisée* en ce que** le mélange d'acides gras estérifiés est composé d'esters éthyliques de diacide cyclique de tall-oil (EEAG21).

6. Utilisation selon la revendication 5, ***caractérisée* en ce que** le mélange présente les caractéristiques suivantes :
- densité à 20°C (g/l) : environ 950
- viscosité cinématique à 40°C (mm²/s) : entre 5 et 20
- indice d'acide (mg de KOH /g) : ≤11
- indice de saponification (mg de KOH/g) : entre 250 et 265
- indice d'iode (g d'I2 /100g) : ≤ 70.

7. Utilisation selon la revendication 4, ***caractérisée* en ce que** le mélange d'acides gras estérifiés est composé d'esters éthyliques époxydés de tournesol oléique (EETOE).

8. Utilisation selon la revendication 7, ***caractérisée* en ce que** le mélange d'EETOE présente les caractéristiques suivantes :
- indice d'acide (mg de KOH/g): ≤ 2
- indice de saponification (mg de KOH /g) : entre 175 et 185
- indice d'iode (g d'I₂/100g) : ≤ 10
- indice de peroxyde (meq d'O₂/kg) : ≤ 50
- indice d'oxyrane (%) ≥ 4,5
- indice d'hydroxyle (mg de KOH/g) : ≤ 20
- viscosité cinématique (mm²/s à 40°C) : entre 5 et 20.

9. Composition comprenant une résine de PVC et un plastifiant tel que défini dans l'une des revendications 1 à 8.

10. Composition selon la revendication 9, ***caractérisée* en ce qu'**elle comprend en outre un stabilisant thermique.

11. PVC plastifié au moyen d'un plastifiant tel que défini dans l'une des revendications 1 à 8.

12. Revêtement comprenant au moins une couche de PVC plastifiée au moyen d'un plastifiant tel que défini dans l'une des revendications 1 à 8.

13. Revêtement selon la revendication 12 ***caractérisé* en ce qu'**il s'agit d'un revêtement de sol.

14. Accessoire de finition de pose d'un revêtement de sol en PVC, plastifié au moyen d'un plastifiant tel que défini dans l'une des revendications 1 à 8 et obtenu par extrusion sous forme de profilés.

## Claims

1. Use of esterified fatty acids as plasticizers for PVC, ***characterized* in that:**
- the fatty acids, isolated from tall-oil, have undergone a Diels-Alder reaction and have the general formula: 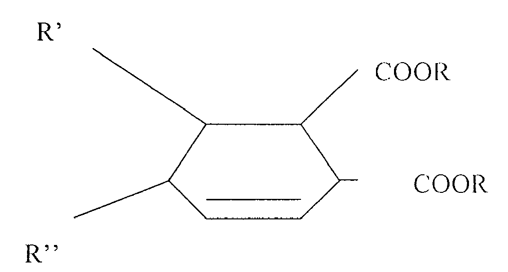
where R = alcohol radical;
R' and R"= C₁₄ to C₂₂ radical,
or
- the fatty acids are isolated from oleic sunflower oil and are epoxidized.

2. Use according to Claim 1, ***characterized* in that** it relates to a mixture of esterified fatty acids.

3. Use according to either of Claims 1 and 2, ***characterized* in that** the fatty acids have a carbon chain comprising 16 to 22 carbon atoms.

4. Use according to one of the preceding claims, ***characterized* in that** the esterified fatty acids are ethyl esters.

5. Use according to Claim 4, ***characterized* in that** the mixture of esterified fatty acids is composed of ethyl esters of cyclic diacid of tall-oil (EEAG21).

6. Use according to Claim 5, ***characterized* in that** the mixture has the following properties:
- density at 20°C (g/I): about 950
- kinematic viscosity at 40°C (mm²/s): 5 to 20
- acid number (mg KOH/g): ≤11
- saponification number (mg KOH/g): 250 to 265
- iodine number (g I₂/100g): ≤ 70.

7. Use according to Claim 4, **characterized in that** the mixture of esterified fatty acids is composed of epoxidized ethyl esters of oleic sunflower (EETOE).

8. Use according to Claim 7, ***characterized* in that** the mixture of EETOE has the following properties:
- acid number (mg KOH/g): ≤ 2
- saponification number (mg KOH/g): 175 to 185
- iodine number (g I₂/100g): ≤ 10
- peroxide number (meq O₂/kg): ≤ 50
- oxyrane number (%) ≥4.5
- hydroxyl number (mg KOH/g): ≤ 20
- kinematic viscosity (mm²/s at 40°C): 5 to 20.

9. Composition comprising a PVC resin and a plasticizer according to one of Claims 1 to 8.

10. Composition according to Claim 9. ***characterized* in that** it further comprises a thermal stabilizer.

11. PVC plasticized using a plasticizer according to one of Claims 1 to 8.

12. Coating comprising at least one layer of PVC plasticized using a plasticizer according to one of Claims I to 8.

13. Coating according to Claim 12, ***characterized* in that** it is a floor covering.

14. Finishing accessory for laying a PVC floor covering, plasticized using a plasticizer according to one of Claims 1 to 8 and obtained by extrusion in the form of profiled sections.

## Patentansprüche

1. Verwendung einer veresterten Fettsäure als Weichmacher für PVC, **dadurch gekennzeichnet, dass:**
- aus Tallöl isolierte Fettsäuren einer Diels-Alder-Reaktion unterzogen wurden und eine allgemeine Formel aufweisen: 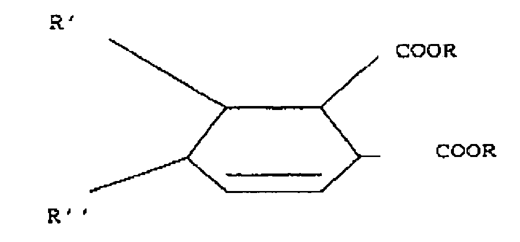
wobei R = Alkoholradikal;
R' und R" = Radikal C₁₄ bis C₂₂,
oder
- die Fettsäuren aus Öl der Ölsonnenblume isoliert und epoxidiert werden.

2. Verwendung nach Anspruch 1, **dadurch gekennzeichnet, dass** es sich um eine Mischung aus veresterten Fettsäuren handelt.

3. Verwendung nach Anspruch 1 oder 2, **dadurch gekennzeichnet, dass** die Fettsäuren eine Kohlenstoffkette besitzen, die 16 bis 22 Kohlenstoffatome aufweist.

4. Verwendung nach einem der vorhergehenden Ansprüche, **dadurch gekennzeichnet, dass** die veresterten Fettsäuren Ethylester sind.

5. Verwendung nach Anspruch 4, **dadurch gekennzeichnet, dass** die Mischung aus veresterten Fettsäuren sich aus Ethylestern von zyklischem Tallöldiacid (EEAG21) zusammensetzt.

6. Verwendung nach Anspruch 5, **dadurch gekennzeichnet, dass** die Mischung die folgenden Eigenschaften aufweist:
- Dichte bei 20 °C (g/l): ca. 950
- kinematische Viskosität bei 40 °C (mm²/s): zwischen 5 und 20
- Säurezahl (mg KOH/g): ≤ 11
- Verseifungszahl (mg KOH/g): zwischen 250 und 265
- Iodzahl (g I₂/100 g) : ≤ 70

7. Verwendung nach Anspruch 4, **dadurch gekennzeichnet, dass** die Mischung von veresterten Fettsäuren sich aus epoxidierten Ethylestern vom Öl der Ölsonnenblume (EETOE) zusammensetzt.

8. Verwendung nach Anspruch 7, **dadurch gekennzeichnet, dass** die EETOE-Mischung die folgenden Merkmale aufweist:
- Säurezahl (mg KOH/g): ≤ 2
- Verseifungszahl (mg KOH/g): zwischen 175 und 185
- Iodzahl (g I₂/100 g): ≤ 10
- Peroxidzahl (mEq O₂/kg) : ≤ 50
- Oxyranzahl (%) ≥ 4,5
- Hydroxylzahl (mg KOH/g): ≤ 20
- kinematische Viskosität (mm²/s bei 40 °C): zwischen 5 und 20

9. Zusammensetzung, umfassend ein PVC-Harz und einen Weichmacher der in einem der Ansprüche 1 bis 8 definierten Art.

10. Zusammensetzung nach Anspruch 9, **dadurch gekennzeichnet, dass** sie des Weiteren einen thermischen Stabilisator enthält.

11. PVC, plastifiziert mittels eines Weichmachers der in einem der Ansprüche 1 bis 8 definierten Art.

12. Belag, enthaltend wenigstens eine Schicht aus PVC, das mittels eines Weichmachers der in einem der Ansprüche 1 bis 8 definierten Art plastifiziert wird.

13. Belag nach Anspruch 12, **dadurch gekennzeichnet, dass** es sich um einen Bodenbelag handelt.

14. Fertigstellungszubehör zum Verlegen eines Bodenbelags aus PVC, das mittels eines Weichmachers der in einem der Ansprüche 1 bis 8 definierten Art plastifiziert und durch Extrusion in Form von Profilen erhalten wird.
